# EUROPEAN PATENT APPLICATION

(11) **EP 2 375 809 A1**
(43) Date of publication of application: **12.10.2011**
(21) Application number: 09836004.3
(22) Date of filing: 30.11.2009
(51) Int. Cl.: H04W 36/00

(54) **METHOD AND DEVICE FOR USERS' UPLINK AND DOWNLINK UNSYNCHRONIZED SWITCHING**

(30) Priority: 31.12.2008 CN 200810189802
(71) Applicant: Huawei Technologies Co., Ltd., Shenzhen, Guangdong 518129 (CN)
(72) Inventor: YU, Yinghui, Shenzhen Guangdong 518129 (CN); WAN, Lei, Shenzhen Guangdong 518129 (CN)
(74) Representative: Pfenning, Meinig & Partner GbR
(86) International application number: PCT/CN2009/075211
(87) International publication number: WO 2010/075717

(57) **Abstract**

In the field of communications, a method and a device for user uplink and downlink unsynchronized switching are provided. The method includes: receiving a measurement report sent by a user; switching, according to the received measurement report, an uplink cell of the user if only the uplink cell is required to be switched in the uplink cell and a downlink cell of the user; and switching the downlink cell of the user if only the downlink cell is required to be switched in the uplink cell and the downlink cell of the user. The device includes: a receiving module, a first configuring module, a first switching module, a second configuring module, and a second switching module. Through the method and the device, if the one-direction switching of uplink or downlink is performed by the user, user uplink and downlink unsynchronized switching is implemented through configuring resources in the single direction.

## Description

This application claims priority to Chinese Patent Application No. CN 200810189802.6, filed with the Chinese Patent Office on December 31, 2008 and entitled "METHOD AND DEVICE FOR USER UPLINK AND DOWNLINK UNSYNCHRONIZED SWITCHING", which is incorporated herein by reference in its entirety.

### FIELD OF THE INVENTION

The present invention relates to the field of communication technologies, and in particular, to a method and a device for user uplink and downlink unsynchronized switching.

### BACKGROUND OF THE INVENTION

In a Long Term Evolution (LTE) system, in order to improve the using experience of an edge user, the Coordinated Multi-Point transmission and reception (CoMP) technology is introduced. In a CoMP communication system, a user may receive and send data through a plurality of cells, and the cells may be distributed under the same network node, for example, the cells are distributed under the same Evolution NodeB (eNB, that is, a base station of the LTE system) or different network nodes. For the purpose of achieving optimal performances of receiving and sending the data by the user, the user may independently maintain the uplink and downlink cells in the CoMP communication system. Since the user may independently maintain the uplink and downlink cells, the uplink cell of the user may change sometimes, while the downlink cell does not change, or the downlink cell of the user changes, while the uplink cell does not change.

In the LTE system, in order to further improve the spectral efficiency of the system and the throughput of the user, the carrier aggregation technology is further introduced. The carrier aggregation refers to that the user uses a plurality of member carriers at the same time, and each member carrier may be used by one cell. In a carrier aggregation scenario, since the capabilities of the uplink and the downlink of the user are different, the uplink or downlink member carrier may not change at the same time.

That is, uplink and downlink unsynchronized switching occurs in the aggregation scenario. When the switching of uplink and downlink cells occurs, the network side delivers measurement control information to the user to regulate a measurement action and a measurement report criterion of the user. The user measures the adjacent cells of the access cell, and reports the measurement result conforming to a report criterion in a measurement report form to the network node, where the measurement report includes cell identifiers (IDs) conforming to the report criterion. The network node makes a decision, according to the measurement result reported by the user, in terms of user uplink and downlink switching. If the user performs uplink and downlink switching, the uplink cell and the downlink cell of the user are switched at the same time.

After the research of the prior art, the inventors find that the prior art at least has the following problems.

When the user performs uplink and downlink switching, the uplink cell and the downlink cell of the user are always switched at the same time. However, in some new situations, such as the aggregation scenario or the CoMP scenario, only the uplink cell of the user changes or the downlink cell changes sometimes, and since signal levels of the uplink and the downlink of the user are different, the uplink signal is poor sometimes or the downlink signal is poor sometimes, and at this time, uplink and downlink synchronized switching may cause that the whole performance of the data is deteriorated. In addition, if the uplink or downlink cell without data transmission is switched, the number of the cells required to be maintained by the user is increased, thereby increasing the maintenance complexity of the user and the system.

### SUMMARY OF THE INVENTION

In order to implement unsynchronized uplink and downlink switching of a user in a communication system, embodiments of the present invention provide a method and a device for unsynchronized uplink and downlink switching of the user. The technical solutions are as follows.

An embodiment of the present invention provides a method for unsynchronized uplink and downlink switching of the user, where the method includes:
receiving a measurement report sent by the user;
according to the received measurement report, configuring uplink resources of the user and switching an uplink cell of the user, if only the uplink cell is required to be switched in the uplink cell and a downlink cell of the user; and
according to the received measurement report, configuring downlink resources of the user and switching the downlink cell of the user, if only the downlink cell is required to be switched in the uplink cell and the downlink cell of the user.

An embodiment of the present invention further provides a device for user uplink and downlink unsynchronized switching, where the device includes:
a receiving module, adapted to receive a measurement report sent by a user;
a first switching module, adapted to switch, according to the measurement report received by the receiving module, an uplink cell of the user, if only the uplink cell is required to be switched in the uplink cell and a downlink cell of the user; and
a second switching module, adapted to switch, according to the measurement report received by the receiving module, the downlink cell of the user, if only the downlink cell is required to be switched in the uplink cell and the downlink cell of the user.

Through the embodiments of the present invention, if one-direction switching of uplink or downlink is performed by the user, user uplink and downlink unsynchronized switching is implemented through configuring resources in the single direction, thereby reducing the number of the cells required to be maintained by the user and the maintenance complexity of the user and the system.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of a method for unsynchronized uplink and downlink switching of a user according to Embodiment 1 of the present invention;
FIG. 2 is a flow chart of a method for unsynchronized uplink and downlink switching of a user according to Embodiment 2 of the present invention;
FIG. 3 is a flow chart of a method for unsynchronized uplink and downlink switching of a user according to Embodiment 3 of the present invention; and
FIG. 4 is a structural view of a device for unsynchronized uplink and downlink switching of a user according to Embodiment 4 of the present invention.

### DETAILED DESCRIPTION OF THE EMBODIMENTS

In order to make the objectives, technical solutions, and advantages of the present invention more comprehensible, the present invention is described in further detail below with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

### Embodiment 1

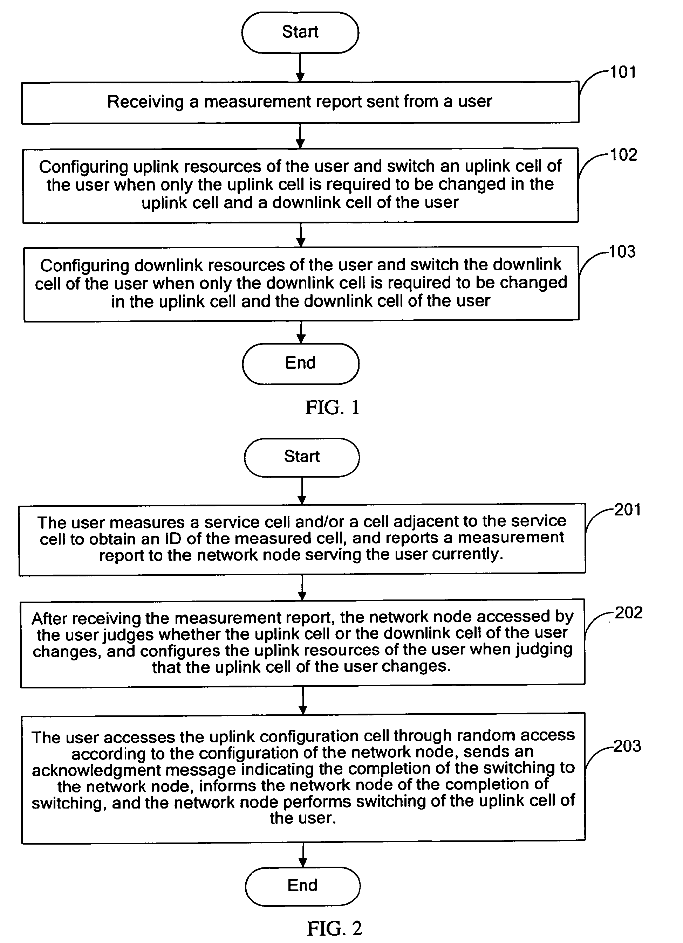

In order to implement unsynchronized uplink and downlink switching of a user in a communication system, an embodiment of the present invention provides a method for user uplink and downlink unsynchronized switching. Referring to FIG. 1, the method includes the following steps.

Step 101: receiving a measurement report sent by a user.

Step 102: configuring uplink resources of the user and switching an uplink cell of the user if the user needs only to switch the uplink cell among the uplink cell and the downlink cell of the user.

Specifically, if only the uplink cell is required to be switched, uplink resource configuration is merely performed on the user in one direction, and downlink resource configuration remains unchanged, so that the user can perform switching of the uplink cell in one direction.

Step 103: configuring downlink resources of the user and switching the downlink cell of the user if only the user only needs to switch the downlink cell among the uplink cell and the downlink cell of the user.

Specifically, if only the downlink cell is required to be switched, the downlink resource configuration is merely performed on the user in one direction, and the downlink resource configuration remains unchanged, so that the user can perform switching of the downlink cell in one direction.

Through the embodiment of the present invention, if switching of uplink or downlink is performed for the user in one direction, unsynchronized uplink and downlink switching of the user is implemented through configuring resources in the single direction, thereby reducing the number of the cells required to be maintained by the user and the maintenance complexity of the user and the system.

### Embodiment 2

In order to implement user uplink and downlink unsynchronized switching in a communication system, an embodiment of the present invention provides a method for user uplink and downlink unsynchronized switching.

Specifically, for example, a user performs a one-direction switching of uplink in the same network node, that is, an uplink cell of the user changes, while the downlink cell does not change, and meanwhile, switching of the uplink cell of the user does not cross the network node. At this time, referring to FIG. 2, the process of switching the uplink cell of the user includes the following steps.

In step 201, the user measures a service cell and/or a cell adjacent to the service cell to obtain an ID of the measured cell, and reports a measurement report to the serving network node, where the measurement report includes the cell ID meeting the measurement requirements.

In step 202, after receiving the measurement report, the network node judges, according to the measurement report, whether the uplink cell or the downlink cell of the user is required to be switched, and configures uplink resources of the user if judging that the uplink cell of the user is required to be switched.

Specifically, there may be two ways for configuring the uplink resources of the user by the network node. The first method is that, the network node determines an uplink configuration cell of the user according to the measurement report, where the uplink configuration cell is a cell required to be switched to by the user, configures the ID for the user on the uplink configuration cell, and configures uplink radio resources of the user.

The other method is that, the network node updates a resource corresponding relation of the uplink configuration cell of the user in the configuration of the uplink radio resources according to the change of the uplink configuration cell of the user, that is, according to the configuration of uplink configuration cell with the uplink switching.

The two methods are described in detail in the following.

In step 202a, the network node determines the uplink configuration cell of the user according to the measurement report, configures the ID for the user on the uplink configuration cell, and configures the uplink radio resources of the user.

Specifically, the network node selects an appropriate cell from the related uplink cells of the user as the uplink configuration cell of the user according to the measurement report. For example, the network node may select the uplink configuration cell of the user from the reported cells in the measurement report of the user according to the measurement report of the user in combination with a Radio Resource Management (RRM) algorithm. It should be noted that, if the cell selected by the network node is not in the communication list of the user before, the network node is required to send information of increasing links to the uplink configuration cell and the user.

After the appropriate uplink configuration cell is selected, the ID is configured for the user on the uplink configuration cell, and the uplink radio resources of the user are configured. For example, the configuring the ID for the user may be as follows: a Cell Radio Network Temporary Identifier (C-RNTI) (a user ID on a public transmission channel) is allocated for the user in the uplink configuration cell, or other user IDs may also be allocated, such as a unique ID in an access network identifying the user. The configuring the uplink radio resources of the user may be as follows: an uplink Radio Bearer (RB) of the user is configured.

The configuration of the uplink RB includes:

```
          {(a network node ID)
         the user ID;
         an uplink Evolved Packet System (EPS) bearer ID;
         an uplink RB ID;
         uplink Packet Data Convergence Protocol (PDCP) configuration;
         uplink Radio Link Control (RLC) configuration;
         uplink logical channel configuration;
         uplink transmission channel configuration; and
          uplink physical channel configuration;
          }
```

The performing the radio resource configuration has the following two manners. The first manner is that, only the uplink radio resources are configured; the other manner is that, the uplink and downlink radio resources are configured at the same time, but the original resource configuration remains unchanged if the downlink radio resources are configured. The configuration of the RB is still taken as an example, the configuration of the downlink RB includes:

```
          {(a network node ID)
          the ID used by the user in the downlink cell;
          a downlink cell list;
          {scramble information of the cell;
          a high-layer ID of the cell;}
          a downlink EPS bearer ID;
          a downlink RB ID;
          downlink PDCP configuration;
          downlink RLC configuration;
          downlink logical channel configuration;
          downlink transmission channel configuration; and
          downlink physical channel configuration;
          }
```

In the foregoing resource configuration, the main content of the configuration is described in the following.

The uplink and downlink PDCP configuration includes: setting of a discarding timer, whether the report of an RLC state is required, setting of clearing a timer, the size of a Service Node (SN) of the PDCP; and algorithm of header compression.

The uplink RLC configuration includes: poll-related setting in an Affirm Mode (AM), and the setting of the length of the SN in an Un-affirm mode (UM). The downlink RLC configuration includes: the setting of reordering and the setting of state inhibition.

The uplink logical channel configuration includes: a priority of the logical channel, a preferred bit rate, and a logical channel group to which the uplink logical channel belongs.

The uplink and downlink transmission channel configuration, that is, Media Access Control (MAC) layer configuration, includes: the configuration of continuous scheduling, the maximum number of retransmission, the setting of a periodic state report timer, the setting of Discontinuous Reception (DRX), the setting of a time sequence timer and a Power Headroom Report (PHR).

The uplink physical channel configuration includes: the setting of Downlink Physical Channels (PDSCH), the setting of Uplink Physical Channels (PUCCH), the setting of uplink power control, antenna information and scheduling request.

The downlink physical channel configuration includes: the setting of the PDSCH, the PUCCH, the antenna information and the scheduling request.

In the configuration of the downlink radio resources, the configuration of the resources remains unchanged, and after the configuration of the radio resources is completed, user uplink switching may be performed.

In step 202b, the network node updates the resource corresponding relation of the uplink configuration cell of the user in the configuration of the uplink radio resources according to the change of the uplink configuration cell of the user, that is, according to the configuration of the uplink configuration cell.

Specifically, referring to Table 1, the resource corresponding relation of the uplink configuration cell includes a corresponding relation of the user uplink configuration cell and the user ID, where the user ID is the ID allocated for the user by the uplink configuration cell. In the uplink direction in the table, the uplink configuration cells of the user include cell 1, cell 2 and cell 3, the ids (IDs) allocated for the user in cell 1 is UE id1, the ID allocated for the user in cell 2 is UE id2, and the ID allocated for the user in cell 3 is UE id3. The updating the resource corresponding relation of the uplink configuration cell is specifically as follows: The uplink configuration cell of the user is determined, the user ID allocated for the user on the uplink configuration cell is obtained, the corresponding relation of the uplink cell and the ID allocated for the user is updated, for example, if the uplink cell of the user is switched from cell 1 to cell 2, the ID allocated for the user on cell 2 is updated.

It should be complementarily noted that, if anchor cell is not configured on the uplink resources of the user, the related cells are equal at this time. Since the used cell should be designated in the physical layer configuration, one user ID is required to be configured for each cell, and the resource corresponding relation of the uplink configuration cell is as shown in Table 1.

| UL (Uplink) | | DL (Downlink) | |
|---|---|---|---|
| Cell list | User ID | Cell list | User ID |
| Cell 1 | User id1 | Cell 4 | User id4 |
| Cell 2 | User id2 | Cell 5 | User id5 |
| Cell 3 | User id3 | Cell 6 | User id6 |

### Table 1

When the anchor cell is configured on the uplink resources of the user, the physical channel may distinguish the cell IDs at this time. In the resource corresponding relation table of the uplink configuration cell, it is merely required to indicate the uplink anchor point cell and the downlink anchor point cell, and the user IDs may not be configured for other related cells, and at this time, the resource corresponding relation of the uplink configuration cell is as shown in Table 2.

If an anchor cell is configured for the uplink resources of the user, and the uplink configuration cell of the user is the cell configured as the anchor cell, the user ID allocated for the user on the uplink configuration cell which is configured as the anchor cell is obtained, and the corresponding relation of the uplink configuration cell configured as anchor cell and the ID allocated for the user is updated. If the uplink configuration cell of the user is not the cell configured as the anchor cell, it is merely required to update the uplink configuration cell of the user in the following table.

**Table 2**

| UL (Uplink) | | DL (Downlink) | |
|---|---|---|---|
| Cell list | User ID | Cell list | User ID |
| Anchor cell 1 | User id1 | Anchor cell 4 | User id4 |
| Cell 2 | | Cell 5 | |
| Cell 3 | | Cell 6 | |

After the network node updates the resource corresponding relation of the uplink configuration cell of the user, the network node maintains the uplink and downlink RB of the user according to the condition of the related cells used by the user and the uplink and downlink cell list of the user.

In step 203, the user accesses the uplink configuration cell through the random access process according to the configuration of the network node, sends an acknowledgment message indicating the completion of switching to the network node after completing the update of an uplink link, and informs the network node of the completion of switching, and the uplink configuration cell is used as a new uplink cell of the user after the network node receives the acknowledgment information. Afterwards, the user may send the data through the switched uplink cell.

It should be complementarily noted that, since the uplink cell of the user changes, the network side is required to reconfigure measurement control information for the user according to the features of the new uplink cell, where the reconfigured measurement control information includes a measurement objective and a measurement bandwidth.

When the user performs uplink switching, the user is required to access the uplink configuration cell to obtain the uplink resources and perform uplink synchronization, and at this time, the downlink link of the user is not disconnected from the source network node, and therefore, downlink timing difference between the source cell and the uplink configuration cell is obtained through the downlink link, the uplink timing difference is calculated through the downlink timing difference, the sending time is adjusted through the uplink timing difference if the user sends the access information, random access is used to access the uplink configuration cell, and the connection between the user and the uplink configuration cell is established.

Correspondingly, if the downlink cell of the user changes, while the uplink cell does not change, and meanwhile, switching of the downlink cell of the user does not cross the network node, at this time, if one-direction switching of the downlink cell of the user is performed, the downlink resources are configured for the user to implement downlink switching of the user according to the measurement report of the user in the same way, and the specific method is similar to the method for performing uplink switching in one direction, which is not described in detail herein again. It should be noted that, downlink switching is different from uplink switching in accessing the configuration cell. When the user accesses the downlink configuration cell, since the uplink cell of the user is not switched, that is, the uplink of the user and the network node does not change, it is not required for the user to access the downlink configuration cell through the random access manner, may directly access the downlink configuration cell, and uses the downlink switching completion information sent from the resources of the uplink cell without change.

Through the embodiment of the present invention, if one-direction uplink switching or downlink switching is performed by the user, unsynchronized uplink and downlink switching is implemented through configuring resources in the single direction, thereby reducing the number of the cells required to be maintained by the user and the maintenance complexity of the user and the system.

### Embodiment 3

In order to implement unsynchronized uplink and downlink switching of a user in a communication system, an embodiment of the present invention provides a method for unsynchronized uplink and downlink switching of a user.

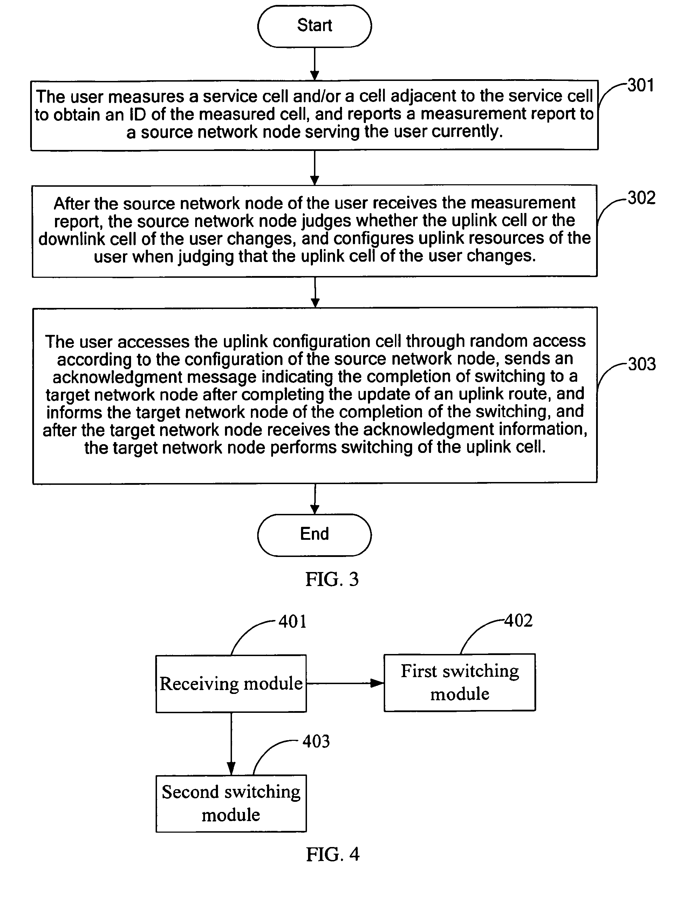

For example, one-direction uplink cell switching is performed across network nodes, that is, the uplink cell of the user changes, while a downlink cell does not change, and meanwhile, the cell to be switched is not covered by the network node where the user is located, and the user performs uplink cell switching across network nodes. At this time, referring to FIG. 3, the process of switching the uplink cell of the user includes the following steps.

In step 301, the user measures the service cell and/or a cell adjacent to the service cell to obtain an ID of the measured cell, and reports a measurement report to the serving source network node, where the measurement report includes the cell ID meeting the measurement requirements.

In step 302, after the source network node accessed by the user receives the measurement report, the source network node judges, according to the measurement report, whether the uplink cell or the downlink cell of the user is required to be switched, and configures uplink resources of the user if judging that the uplink cell of the user is required to be switched.

Specifically, the configuring the uplink resources of the user by the source network node has the following two manners. The first manner is that, the source network node determines the uplink configuration cell of the user according to the measurement report, configures the ID for the user on the uplink configuration cell, and configures uplink radio resources of the user.

The second manner is that, a resource corresponding relation of the uplink configuration cell of the user in the configuration of the uplink radio resources is updated according to the change of the uplink configuration cell of the user.

The first manner is similar to step 202a, and the difference is as follows: if selecting the appropriate uplink configuration cell, the source network node determines the uplink configuration cell of the user according to the measurement report and an RRM algorithm, and negotiates the resources with the network node to which the uplink configuration cell belongs. During the radio resource configuration, the method of radio resource configuration in step 302 is the same as the method of the radio resource configuration in step 202a.

In step 302b, the second method is similar to step 202b, and the difference is as follows: When uplink switching is performed across network nodes, the ID information of the network node is required to be added in the uplink resources of the user. Referring to resource corresponding relation tables of the uplink configuration cell in Table 3 and Table 4, the IDs of the network node are added in Table 3 and Table 4. Cell lists in the tables are lists of the uplink configuration cell of the user, uplink network node IDs in the Table 3 and Table 4 are the IDs of the network node to which the uplink configuration cell of the user belongs.

If anchor cell is not configured on the uplink resources of the user, the related cells are equal at this time. Since the used cell should be designated in the physical layer configuration, one user ID is required to be configured for each cell, and the resource corresponding relation of the uplink configuration cell is as shown in Table 3 at this time. The updating the resource corresponding relation of the uplink configuration cell is specifically as follows: The uplink configuration cell of the user is determined, the user ID allocated for the user on the uplink configuration cell is obtained, and the corresponding relation of the uplink cell and the ID allocated for the user is updated, for example, if the uplink cell of the user is switched from cell 1 to cell 2, the ID allocated for the user on cell 2 is updated.

**Table 3**

| UL (Uplink) | | DL (Downlink) | |
|---|---|---|---|
| (Network node ID) | | (Network node ID) | |
| Cell list | User ID | Cell list | User ID |
| Cell 1 | User id1 | Cell 4 | User id4 |
| Cell 2 | User id2 | Cell 5 | User id5 |
| Cell 3 | User id3 | Cell 6 | User id6 |

When the anchor cell is configured in the uplink configuration cell of the user, the physical channel may distinguish the IDs of the related cells at this time. In the resource corresponding relation table of the uplink configuration cell, it is merely required to indicate the uplink anchor cell and the downlink anchor cell, and the user ID may not be configured for other related cells, and at this time, the resource corresponding relation of the uplink configuration cell is as shown in Table 4.

When anchor cell is configured on the uplink resources of the user, and the uplink configuration cell of the user is configured as anchor cell, the user ID allocated for the user on the uplink configuration cell configured as the anchor cell is obtained, and the corresponding relation of the uplink configuration cell configured as anchor cell and the ID allocated for the user is updated. When the uplink configuration cell of the user is not configured as anchor cell, it is merely required to update the uplink configuration cell of the user in the following table.

**Table 4**

| UL (Uplink) | | DL (Downlink) | |
|---|---|---|---|
| (Network node ID) | | (Network node ID) | |
| Cell list | User ID | Cell list | User ID |
| Anchor cell 1 | User id1 | Anchor cell 4 | User id4 |
| Cell 2 | | Cell 5 | |
| Cell 3 | | Cell 6 | |

After the network node updates the resource corresponding relation of the uplink configuration cell of the user, the network node maintains the uplink and downlink RB of the user according to the condition of the related cells used by the user and the uplink and downlink cell list of the user.

In step 303, the user accesses the uplink configuration cell through the random access process according to the configuration of the source network node, sends an acknowledgment message indicating the completion of switching to a target network node after completing the update of the uplink link, and informs the target network node of the completion of switching, and after the target network node receives the acknowledgment information, the target network node performs switching of the uplink cell and uses the uplink configuration cell as a new uplink cell of the user. Afterwards, the user may send the data through the switched uplink cell.

After switching is completed, the target network node informs a management device of a core network of the uplink change, where the management device of the core network may be a Mobility Management Entity (MME), and the MME informs a serving gateway of the uplink change. In addition, since the user performs the uplink and downlink data operation through different network nodes, the network side is required to maintain a plurality of routes of S1 ports for one user, where the S 1 port is a port connecting the network node and the MME.

It should be complementarily noted that, since the uplink cell of the user changes, the network side is required to reconfigure measurement control information for the user according to the features of the new uplink cell, where the reconfigured measurement control information includes a measurement objective and a measurement bandwidth.

When the user performs uplink switching, the user is required to access the uplink configuration cell to obtain the uplink resources and perform uplink synchronization, and at this time, the downlink of the user is not disconnected from the source network node, and therefore, downlink timing difference between a source cell and the target cell is obtained through the downlink, the uplink timing difference is calculated through the downlink timing difference, the sending time is adjusted through the uplink timing difference if the user sends the access information, random access is used to access the uplink configuration cell, and the connection between the user and the uplink configuration cell is established.

Correspondingly, if the downlink cell of the user changes, while the uplink cell does not change, and meanwhile, switching of the downlink cell of the user is across network nodes, at this time, if one-direction switching of the downlink cell of the user is performed, the downlink resources are configured for the user to implement downlink switching according to the measurement report of the user in the same way, and the specific method is similar to the method for performing one-direction uplink switching, which is not described in detail herein again. It should be noted that, downlink switching is different from uplink switching in accessing the configuration cell, if the user accesses the downlink configuration cell, it is not required to access the downlink configuration cell through random access, the downlink configuration cell may be directly accessed, and downlink switching completion information sent from the resources of the unchanged uplink cell is used.

In addition, after switching across network nodes occurs in the downlink cell, since the cell where the user downlink is located changes, the target network node is required to inform the core network device, such as the MME, of the downlink change, and the MME is also required to inform the serving gateway of the downlink change. When the serving gateway finishes updating the downlink, the serving gateway is required to return the information to the target network node to acknowledge the completion of the route update.

Through the embodiment of the present invention, if one-direction switching of uplink or downlink is performed by the user, unsynchronized uplink and downlink switching is implemented through configuring resources in a single direction, thereby reducing the number of the cells required to be maintained by the user and the maintenance complexity of the user and the system.

### Embodiment 4

Referring to FIG. 4, an embodiment of the present invention provides a device for unsynchronized uplink and downlink switching, where the device includes:
a receiving module 401, adapted to receive a measurement report sent by the user;
a first switching module 402, adapted to switch, according to the measurement report received by the receiving module, an uplink cell of the user, if only the uplink cell is required to be switched in the uplink cell and a downlink cell of the user; and
a second switching module 403, adapted to switch, according to the measurement report received by the receiving module, the downlink cell of the user, if only the downlink cell is required to be switched in the uplink cell and the downlink cell of the user.

The first switching module 402 includes:
a measurement unit, adapted to determine an uplink configuration cell of the user according to the measurement report; and
a configuration unit, adapted to configure an ID for the user on the uplink configuration cell, and configure uplink radio resources of the user.

Alternatively, the first switching module 402 includes:
a measurement unit, adapted to determine an uplink configuration cell of the user according to the measurement report; and
an update unit, adapted to update a resource corresponding relation of the uplink configuration cell according to configuration of the uplink configuration cell of the user.

Further, the update unit includes:
a first update sub-unit, adapted to update a corresponding relation of the uplink configuration cell and a first user ID if anchor cell is not configured on the uplink resources of the user, where the first user ID is the ID allocated for the user on the uplink configuration cell of the user; and
a second update sub-unit, adapted to update a corresponding relation of the uplink configuration cell and a second user ID if the anchor cell is configured on the uplink resources of the user and the uplink configuration cell of the user is configured as the anchor cell, where the second user ID is the ID allocated for the user on the uplink configuration cell of the user.

Further, the update unit further includes:
a third update sub-unit, adapted to update a corresponding relation of the uplink configuration cell and a third user ID if the anchor cell is configured on the uplink resources of the user and the uplink configuration cell of the user is configured as anchor cell, where the third user ID is the ID configured for the user on the cell configured as anchor cell.

The first switching module 402 includes:
a connection unit, adapted to establish a connection between the user and the uplink configuration cell according to the configuration of the uplink resources of the user; and
a switching unit, adapted to switch the uplink cell of the user to the uplink configuration cell after receiving uplink switching completion information sent by the user.

Further, the connection unit is specifically adapted to obtain a timing difference between a source cell of the user and the uplink configuration cell through the downlink of the user, instruct the user to adjust time of accessing the uplink configuration cell according to the timing difference and access the uplink configuration cell through random access, so as to establish the connection between the user and the uplink configuration cell.

The second switching module 403 includes:
a measurement unit, adapted to determine a downlink configuration cell of the user according to the measurement report; and
a configuration unit, adapted to configure an ID for the user on the downlink configuration cell, and configure downlink radio resources of the user.

Alternatively, the second switching module 403 includes:
a measurement unit, adapted to determine a downlink configuration cell of the user according to the measurement report; and
an update unit, adapted to update a resource corresponding relation of the downlink configuration cell of the user according to configuration of the downlink configuration cell of the user.

Further, the update unit includes:
a first update sub-unit, adapted to update a corresponding relation of the downlink configuration cell and a first user ID if the anchor cell is configured on the downlink resources of the user, where the first user ID is the ID allocated for the user on the downlink configuration cell of the user; and
a second update sub-unit, adapted to update a corresponding relation of the downlink configuration cell and a second user ID if the anchor cell is configured on the downlink resources of the user and the downlink configuration cell of the user is a cell configured as anchor cell, where the second user ID is the ID allocated for the user on the downlink configuration cell of the user.

Further, the update unit further includes:
a sixth update sub-unit, adapted to update a corresponding relation of the downlink configuration cell and a third user ID if the anchor cell is configured on the downlink resources of the user and the downlink configuration cell of the user is not configured as the anchor cell, where the third user ID is the ID configured for the user on the cell configured as anchor cell.

The second switching module 403 includes:
a connection unit, adapted to establish the connection between the user and the downlink configuration cell according to the configuration of the downlink resources of the user; and
a switching unit, adapted to switch the downlink cell of the user to the downlink configuration cell after receiving downlink switching completion information sent by the user.

Through the embodiment of the present invention, if the user performs one-direction switching of uplink or downlink, user uplink and downlink unsynchronized switching is implemented through configuring resources in the single direction, thereby reducing the number of the cells required to be maintained by the user and the maintenance complexity of the user and the system.

Those of ordinary skill in the art should understand that all or a part of the steps of the method according to the embodiments of the present invention may be implemented by a program instructing relevant hardware. The program may be stored in a computer readable storage medium, such as a floppy disk, a hard disk, or an optical disk of the computer.

The above descriptions are merely some exemplary embodiments of the present invention, but are not intended to limit the present invention. Any modification, equivalent replacement, or improvement made without departing from the spirit and principle of the present invention should fall within the scope of the present invention.

## Claims

1. A method for unsynchronized uplink and downlink switching of a user, comprising:
receiving a measurement report sent by the user; and
switching, according to the received measurement report, a cell of the user required to be switched, if only uplink cell or downlink cell is required to be switched in the uplink cell and the downlink cell of the user.

2. The method according to claim 1, wherein
the switching the cell of the user required to be switched comprises:
determining a configuration cell of the user according to the measurement report, and configuring resources of the user; and
establishing a connection between the user and the configuration cell according to configuration of the resources of the user, and switching the cell of the user required to be switched to the configuration cell after receiving switching completion information sent by the user;
wherein the cell required to be switched, the configuration cell, the resources of the user and the switching completion information are all uplink or downlink.

3. The method according to claim 2, wherein
the configuring the resources of the user comprises:
configuring an identifier (ID) for the user on the configuration cell, and configuring radio resources of the user; or
updating a resource corresponding relation of the configuration cell according to configuration of the configuration cell;
wherein if the configuration cell is an uplink configuration cell, the radio resources of the user are uplink radio resources of the user; and if the configuration cell is a downlink configuration cell, the radio resources of the user are downlink radio resources of the user.

4. The method according to claim 3, wherein
the resource corresponding relation comprises: a corresponding relation of cell bearer resources, a cell ID and a user ID; or a corresponding relation of bearer resources and an ID of a network node, the cell ID and the user ID.

5. The method according to claim 3 or 4, wherein the updating the resource corresponding relation of the configuration cell comprises one or any combination of the following conditions:
updating the resource corresponding relation of the configuration cell to the ID configured for the user and used on the configuration cell if the configuration cell is used, if anchor cell is not configured on the resources of the user;
updating the resource corresponding relation of the configuration cell to the ID configured for the user and used on the configuration cell if the configuration cell is used, if the anchor cell is configured on the resources of the user and the configuration cell is configured as the anchor cell; and
updating the resource corresponding relation of the configuration cell to the ID configured for the user and used on the cell configured as the anchor cell if the configuration cell is used, if the anchor cell is configured on the resources of the user and the configuration cell is not configured as the anchor cell;
wherein the resources of the user and the configuration cell are all uplink or downlink.

6. The method according to any one of claims 2 to 4, wherein if the configuration cell is the uplink configuration cell, the establishing the connection between the user and the configuration cell comprises:
obtaining, through a downlink of the user, a timing difference between a source cell of the user and the uplink configuration cell; and
instructing the user to adjust, according to the timing difference, time of accessing the uplink configuration cell and access the uplink configuration cell through random access, so as to establish the connection between the user and the uplink configuration cell.

7. The method according to any one of claims 2 to 4, wherein if the configuration cell is the downlink configuration cell, the switching completion information sent by the user is sent through the resources of the unchanged uplink configuration cell used by the user.

8. A device for unsynchronized uplink and downlink switching of a user, comprising:
a receiving module (401), adapted to receive a measurement report sent by the user;
a first switching module (402), adapted to switch, according to the measurement report received by the receiving module (401), an uplink cell of the user if only the uplink cell is required to be switched in the uplink cell and the downlink cell of the user; and
a second switching module (403), adapted to switch, according to the measurement report received by the receiving module (401), the downlink cell of the user if only the downlink cell is required to be switched in the uplink cell and the downlink cell of the user.

9. The device according to claim 8, wherein
the first switching module (402) comprises:
a first measurement unit, adapted to determine an uplink configuration cell of the user according to the measurement report;
a first configuration unit, adapted to configure an identifier (ID) for the user on the uplink configuration cell, and configure uplink radio resources of the user;
a first connection unit, adapted to establish a connection between the user and the uplink configuration cell according to configuration of the uplink resources of the user; and
a first switching unit, adapted to switch the uplink cell of the user to the uplink configuration cell after receiving uplink switching completion information sent by the user;
or the first switching module (402) comprises:
a first measurement unit, adapted to determine an uplink configuration cell of the user according to the measurement report;
a first update unit, adapted to update a resource corresponding relation of the uplink configuration cell according to configuration of the uplink configuration cell of the user;
a first connection unit, adapted to establish a connection between the user and the uplink configuration cell according to configuration of uplink resources of the user; and
a first switching unit, adapted to switch the uplink cell of the user to the uplink configuration cell after receiving uplink switching completion information sent by the user.

10. The device according to claim 9, wherein the first update unit comprises one or any combination of the following sub-units:
a first update sub-unit, adapted to update a corresponding relation of the uplink configuration cell and a first user ID if anchor cell is not configured on the uplink resources of the user, wherein the first user ID is the ID configured for the user on the uplink configuration cell;
a second update sub-unit, adapted to update a corresponding relation of the uplink configuration cell and a second user ID if the anchor cell is configured on the uplink resources of the user and the uplink configuration cell is configured as anchor cell, wherein the second user ID is the ID configured for the user on the uplink configuration cell; and
a third update sub-unit, adapted to update a corresponding relation of the uplink configuration cell and a third user ID if the anchor cell is configured on the uplink resources of the user and the uplink configuration cell is configured as anchor cell, wherein the third user ID is the ID configured for the user on the cell configured as anchor cell.

11. The device according to claim 9, wherein
the first connection unit is specifically adapted to obtain a timing difference between a source cell of the user and the uplink configuration cell through a downlink of the user, instruct the user to adjust time of accessing the uplink configuration cell according to the timing difference and access the uplink configuration cell through random access, so as to establish the connection between the user and the uplink configuration cell.

12. The device according to claim 8, wherein the second switching module (403) comprises:
a second measurement unit, adapted to determine a downlink configuration cell of the user according to the measurement report;
a second configuration unit, adapted to configure an ID for the user on the downlink configuration cell, and configure downlink radio resources of the user;
a second connection unit, adapted to establish a connection between the user and the downlink configuration cell according to configuration of the downlink resources of the user; and
a second switching unit, adapted to switch the downlink cell of the user to the downlink configuration cell after receiving downlink switching completion information sent by the user;
or the second switching module (403) comprises:
a second measurement unit, adapted to determine a downlink configuration cell of the user according to the measurement report;
a second update unit, adapted to update a resource corresponding relation of the downlink configuration cell of the user according to configuration of the downlink configuration cells of the user;
a second connection unit, adapted to establish a connection between the user and the downlink configuration cell according to configuration of downlink resources of the user; and
a second switching unit, adapted to switch the downlink cell of the user to the downlink configuration cell after receiving downlink switching completion information sent by the user.

13. The device according to claim 12, wherein the second update unit comprises one or any combination of the following sub-units:
a fourth update sub-unit, adapted to update a corresponding relation of the downlink configuration cell and a first user ID if anchor cell is not configured on the downlink resources of the user, wherein the first user ID is the ID configured for the user on the downlink configuration cell;
a fifth update sub-unit, adapted to update a corresponding relation of the downlink configuration cell and a second user ID if the anchor cell is configured on the downlink resources of the user and the downlink configuration cell is a cell with the anchor cell, wherein the second user ID is the ID configured for the user on the downlink configuration cell; and
a sixth update sub-unit, adapted to update a corresponding relation of the downlink configuration cell and a third user ID if the anchor cell is configured on the downlink resources of the user and the downlink configuration cell of the user is not configured as anchor cell, wherein the third user ID is the ID configured for the user on the cell configured as the anchor cell.
